# EUROPEAN PATENT APPLICATION

(11) **EP 4 417 839 A1**
(43) Date of publication of application: **21.08.2024**
(21) Application number: 23305191.1
(22) Date of filing: 14.02.2023
(51) Int. Cl.: F16H 55/12, F16H 55/17

(54) **GEAR**

(71) Applicant: Goodrich Actuation Systems SAS, 27950 Saint-Marcel (FR)
(72) Inventor: SERRAND, Maxime, 75017 PARIS (FR); POTIER, Karl, 13090 AIX EN PROVENCE (FR)
(74) Representative: Dehns

(57) **Abstract**

A method of manufacturing a gear, the method comprising: providing a shaft; forming a groove into the shaft; and inserting a tooth into the groove such that the tooth is retained in the groove by an interference fit.

## Description

### FIELD OF THE INVENTION

This application relates to a method of manufacturing a gear, a gear, a gearbox, an aircraft power system and an aircraft.

### BACKGROUND

It is desirable to improve the mechanical properties of materials for gears such that their size and weight can be reduced, particularly in gearboxes for aircraft. Materials with improved mechanical properties often have high associated costs and manufacturability issues.

### SUMMARY

According to a first aspect there is provided a method of manufacturing a gear, the method comprising: providing a shaft; forming a groove into the shaft; and inserting a tooth into the groove such that the tooth is retained in the groove by an interference fit.

By connecting a tooth to a separate shaft component in this way, the tooth may be made of a different material from the shaft. This may be particularly useful where the tooth is formed of a material with a maximum thickness less than a maximum dimension of the gear. Additionally, cost may be reduced, with the teeth formed of a more expensive material exhibiting improved mechanical properties and the shaft formed of a cheaper material. An interference fit is a simple and effective way to maintain the tooth in the groove.

The method may comprise the shaft being at a higher temperature than the tooth while inserting the tooth into the groove.

The method may comprise heating the shaft to a temperature T1 while inserting the tooth into the groove.

T1 may be greater than 50°C. T1 may be greater than 60°C. T1 may be greater than 75°C. T1 may be greater than 90°C. T1 may be substantially than 100°C.

The method may comprise cooling the tooth to a temperature T2 while inserting the tooth into the groove.

T2 may be less than 10°C. T2 may be less than 0°C. T2 may be less than -10°C. T2 may be substantially -20°C.

The method may comprise fixing a retainer to the shaft such that the tooth is retained in the groove by the retainer in addition to the interference fit. The method may comprise fixing first and second retainers to the shaft.

The retainer may maintain an axial position of the tooth. The interference fit may maintain a radial position of the tooth. The interference fit may maintain a circumferential position of the tooth. The retainer may reduce sliding of the tooth in the groove.

The retainer may be a sleeve. The retainer may surround the shaft. The retainer may be substantially cylindrical. The retainer may be formed of steel.

The retainer may surround a tooth-free portion of the shaft. The tooth-free portion may be at an end of the shaft. The gear may comprise first and second retainers at opposing ends of the shaft.

The method may comprise heating the retainer while providing the retainer around the tooth.

The tooth may be formed of metallic glass. The shaft may be formed of steel.

According to a second aspect there is provided a gear comprising a shaft, the shaft comprising a groove; and a tooth received in the groove, wherein the tooth is retained in the groove by an interference fit.

The gear may comprise a retainer fixed to the shaft, the retainer retaining the tooth in the groove in addition to the interference fit.

The retainer may be a sleeve. The retainer may surround the shaft. The retainer may be substantially cylindrical. The retainer may be formed of steel.

The retainer may maintain an axial position of the tooth. The interference fit may maintain a radial position of the tooth. The interference fit may maintain a circumferential position of the tooth. The retainer may reduce or prevent sliding of the tooth in the groove.

The retainer may surround a tooth-free portion of the shaft. The tooth-free portion may be at an end of the shaft. The gear may comprise first and second retainers at opposing ends of the shaft.

The tooth may be formed of metallic glass. The shaft may be formed of steel.

According to a third aspect there is provided a gearbox comprising the gear described above.

According to a fourth aspect there is provided an aircraft power system comprising the gearbox described above. The aircraft power system may be a propulsion system. The aircraft power system may be a secondary power system. The aircraft power system may be a control system.

According to a fifth aspect there is provided an aircraft comprising the aircraft power system described above.

The method of the first aspect may comprise any of the functional steps described with respect to the second to fifth aspects. The gear of the second aspect may comprise any of the features described with respect to the method of the first aspect. The gearbox of the third aspect may comprise any of the features described with respect to the method of the first aspect and/or the gear of the second aspect. The aircraft power system of the fourth aspect may comprise any of the features described with respect to the method of the first aspect, the gear of the second aspect and/or the gearbox of the third aspect. The aircraft of the fifth aspect may comprise any of the features described with respect to the method of the first aspect, the gear of the second aspect, the gearbox of the third aspect and/or the aircraft power system of the fourth aspect.

### BRIEF DESCRIPTION OF THE DRAWINGS

Various examples will now be described with reference to the accompanying drawings in which:
Fig. 1 shows a perspective view of a gear
Fig. 2 shows an end view of the gear at various stages during a method of manufacturing the gear;
Fig. 3 shows a flow diagram of a method of manufacturing the gear.

### DETAILED DESCRIPTION

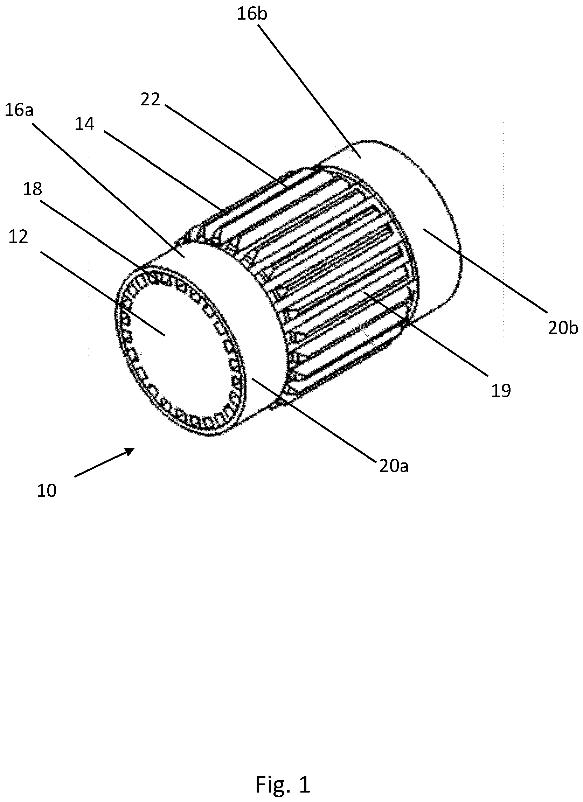

Fig. 1 shows a gear 10. The gear 10 comprises a shaft 12, teeth 14 and retainers 16a 16b.

The shaft 12 is cylindrical. The shaft 12 is formed of stainless steel. The shaft 12 comprises grooves 18. The grooves 18 are formed in a radially outward facing surface 19 (defined with respect to an axis of the shaft 12) of the shaft 12. The grooves 18 extend in an axial direction (i.e. parallel to the axis of the shaft). The grooves 18 extend along a full length of the shaft 12. The grooves 14 are distributed circumferentially around the shaft 12.

The teeth 14 are received in the grooves 18. The teeth 14 extend in the axial direction. The teeth 14 do not extend along the full length of the shaft 12. The teeth 14 do not extend to ends of the shaft 12, such that the shaft 12 comprises first and second tooth-free portions 20a 20b at the ends of the shaft 12. Each tooth 14 comprises an axially extending edge 22.

Each tooth 14 is a separate component. The teeth 14 are separate components from the shaft 12. The teeth 14 are formed of a different material to the shaft 12. The teeth 14 are formed of a material with better mechanical properties (e.g. higher Young Modulus, high endurance, lower elastic deformation, higher hardness, lower corrosion susceptibility and/or lower friction coefficient) than the shaft 12.

The teeth 14 are formed of an amorphous metallic alloy, which may also be referred to as a metallic glass. The amorphous metallic alloy has a random atomic distribution. The amorphous metallic alloys may only be able to form components up to a maximum thickness, which may be around 1 to 1.5 mm.

The teeth 14 are maintained in the grooves 18 by an interference fit. In an unstressed state, each tooth 14 may have a greater width than the groove 18. The teeth 14 may therefore be in a compressed state in the grooves 18 to provide the interference fit. The interference fit maintains a radial and circumferential position of the teeth 14 in the grooves 18.

The gear 10 comprises first and second retainers 16a 16b. The first retainer 16a covers the first tooth-free portion 20a. The second retainer 16b covers the second tooth-free portion 20b. The first and second retainers 16a 16b maintain an axial position of the teeth 14. The first retainer 16a abuts a first end of the teeth 14. The second retainer 16b abuts a second end of the teeth 14. The retainers 16a 16b are fixed to the shaft 12 by a press fit connection (not shown), which maintains an axial position of the retainers 16a 16b.

The retainers 16a 16b are sleeves surrounding the shaft 12. The retainers 16a 16b are cylindrical. The retainers 16a 16b are formed of stainless steel.

In use, the gear 10 forms part of a gearbox (not shown), which in turn forms part of an aircraft power system (e.g. a propulsion system or a control system for moving a control surface) of an aircraft. The teeth 14 mesh with other component(s) of the gearbox to transmit mechanical power as the gear 10 rotates about its axis.

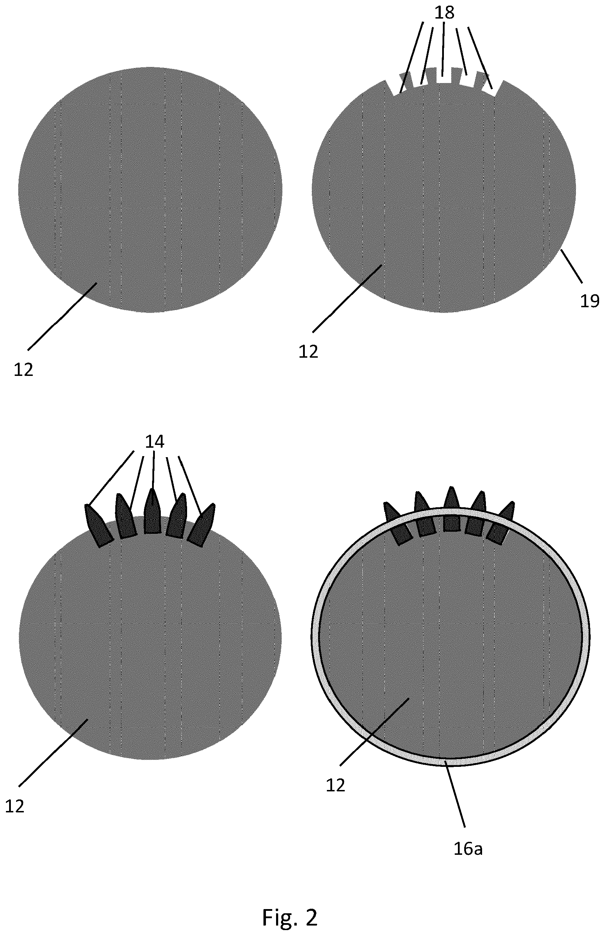

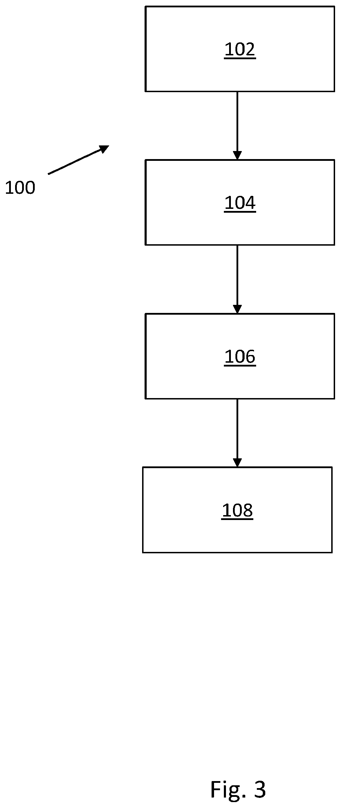

Referring to Fig. 2 and 3, a method 100 of manufacturing the above-described gear 10 comprises a shaft provision step 102, a groove forming step 104, a tooth insertion step 106 and a retainer attaching step 108.

In the shaft provision step 102, the shaft 12 is provided.

In the groove forming step 104, the grooves 18 are formed in the shaft 12. The grooves 18 are formed in the radially outward facing surface 19 of the shaft 12. The grooves 18 are machined in the shaft 12.

In the tooth insertion step 106, the teeth 14 are inserted into the grooves 18. While the teeth 14 are inserted into the grooves 18, the grooves 18 are heated. The teeth 14 are heated to a temperature T1, which in the present example is 100°C. While the teeth 14 are inserted into the grooves 18, the teeth 14 are cooled. The teeth 14 are cooled to a temperature T2, which in the present example is -20°C. By heating the grooves 18 relative to the teeth 14, the grooves 18 expand relative to the teeth 14, which means that larger teeth 14 can be inserted into smaller grooves 18. This improves the interference fit. In some examples, the shaft 12 may be heated with the teeth 14 remaining at ambient conditions or the teeth 14 may be cooled with the shaft 12 remaining at ambient conditions. In others examples, the method of manufacturing may be simplified by inserting the teeth 14 without heating and/or cooling.

In the retainer attaching step 108, first and second retainers 16a 16b are fixed to the shaft 12. The first tooth-free portion 20a of the shaft 12 is inserted into the first retainer 16a. The second tooth-free portion 20b of the shaft 12 is inserted into the second retainer 16b. The retainers 16a 16b may be heated relative to the shaft 12 when the retainers 16a 16b are fixed to the shaft 12.

In some examples, a tooth machining step (not shown) follows the steps described above. In the tooth machining step, the teeth 14 are machined to ensure that they are aligned with each other.

It will be understood that while Fig. 2 shows grooves 18 and teeth 14 around only a portion of the circumference of the shaft 12 for clarity, the grooves 18 and teeth 14 are distributed around the full circumference of the shaft 12 as shown in Fig. 1.

Various aspects of the apparatus disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A method of manufacturing a gear, the method comprising:
providing a shaft;
forming a groove into the shaft; and
inserting a tooth into the groove such that the tooth is retained in the groove by an interference fit.

2. A method according to claim 1 and comprising heating the shaft to a temperature T1 while inserting the tooth into the groove.

3. A method according to claim 2, wherein T1 is greater than 75°C, optionally substantially 100°C.

4. A method according to any preceding claim and comprising cooling the tooth to a temperature T2 while inserting the tooth into the groove.

5. A method according to claim 4, wherein T2 is less than 0°C, optionally substantially -20°C.

6. A method according to any preceding claim and comprising fixing a retainer to the shaft such that the tooth is retained in the groove by the retainer in addition to the interference fit.

7. A method according to claim 6, wherein the retainer is a sleeve.

8. A method according to any preceding claim and comprising forming a plurality of grooves around a circumference of the shaft and inserting a plurality teeth into the grooves such that the teeth are retained in the grooves by the interference fit.

9. A method according to any of the preceding claims, wherein the tooth is formed of a metallic glass.

10. A gear comprising:
a shaft, the shaft comprising a groove; and
a tooth received in the groove, wherein the tooth is retained in the groove by an interference fit.

11. A gearbox comprising the gear of claim 10.

12. An aircraft power system comprising the gearbox of claim 11.

13. An aircraft power system according to claim 12, wherein the aircraft power system is a propulsion system.

14. An aircraft power system according to claim 12, wherein the aircraft power system is a control system.

15. An aircraft comprising the aircraft power system of any of claims 12 to 14.
